# EUROPÄISCHE PATENTSCHRIFT

(11) **EP 3 416 504 B1**
(45) Veröffentlichungstag und Bekanntmachung des Hinweises auf die Patenterteilung: **01.04.2020**
(21) Anmeldenummer: 17707492.9
(22) Anmeldetag: 15.02.2017
(51) Int. Cl.: A24C 5/34

(54) **ABRAUCHMASCHINE UND VERFAHREN ZUM ABRAUCHEN VON TABAKPRODUKTEN**
SMOKING MACHINE AND SMOKING METHOD OF TOBACCO PRODUCTS
MACHINE DE FUMAGE ET PROCÉDÉ DE FUMAGE DE PRODUITS DE TABAC

(30) Priorität: 17.02.2016 DE 102016001867
(43) Veröffentlichungstag der Anmeldung: 26.12.2018
(73) Patentinhaber: Borgwaldt KC GmbH, 22525 Hamburg (DE)
(72) Erfinder: ROSE, Nils, 22926 Ahrensburg (DE)
(74) Vertreter: Schmidbauer, Andreas Konrad
(86) Internationale Anmeldenummer: PCT/EP2017/053430
(87) Internationale Veröffentlichungsnummer: WO 2017/140740

(56) Entgegenhaltungen:
- WO-A1-02/098245
- WO-A1-2014/206934
- US-A- 5 117 845

## Beschreibung

Die Erfindung betrifft eine Abrauchmaschine mit wenigstens einer Rauchfalle, die beispielsweise einen Filterhalter und ein darin angeordnetes Filterelement aufweist, sowie ein Abrauchverfahren für Tabakprodukte.

Bei herkömmlichen Abrauchverfahren wie zum Beispiel aus WO 2014/206934 A bekannt, werden die Abrauch- und Produktparameter manuell ermittelt und mit den Analyseergebnissen des Abrauchvorgangs und der nachfolgenden chemischen Analyse der Abrauchprodukte in Beziehung gesetzt. Dies erfordert einen hohen Arbeitsaufwand, wobei zusätzlich die Sicherung der Zuordnungen der Daten beispielsweise durch Verwechslungen der Chargen usw. nicht gewährleistet werden kann.

Der Erfindung liegt daher die Aufgabe zugrunde, eine Abrauchmaschine sowie ein Abrauchverfahren zu schaffen, mit der bzw. dem die Zuordnung der Abrauchprodukte und Analyseergebnisse zu den Tabakprodukten, die abgeraucht werden, zuverlässig gewährleistet ist, und insbesondere auch die Auswertung und korrekte Abrauchergebnisse auf einfache Weise und zuverlässig ermittelt werden können.

Die gestellte Aufgabe wird mit einer Abrauchmaschine gemäß der Merkmale des Anspruchs 1 gelöst. Durch Verwendung von an sich bekannten Identitätselementen wie sie beispielsweise in den Druckschriften DE 10 2013 107 307 A1, US 2015/0310723 A1 und Neidig, Jörg u.a.: RFID in der Automatisierung - ein Blick in die Zukunft in: atp 7.2008, Seiten 34-38 beschrieben sind, für die einzelnen nicht maschinengebundenen Komponenten und in Zusammenhang mit der Rauchmaschine verwendeten Bauteile, an denen die jeweils mit spezifischen Informationen versehenen Identitätselemente angebracht sind, ist eine ständige Identifizierung der Komponenten und Bauteile, beginnend von den Vorbereitungen, über den Abrauchvorgang selbst und/oder nachfolgenden Auswerteabläufen hinweg gewährleistet, wobei die Informationen aus den jeweiligen Identitätselementen auslesbar und/oder in sie einlesbar sind, die zusätzlich zu den Informationen in den jeweiligen Identitätselementen Messergebnisse von Laborgeräten, wie etwa einem Wiegeergebnis oder einer Feuchtigkeitsmessung einer Probe sind, und diese Messergebnisse und/oder Abrauchparameter in dem jeweiligen Identitätselement verknüpft und ggf. sofort für die Steuerung, Anpassung, Dokumentation und Auswertung des Abrauchvorgangs genutzt werden. Die Informationen der Identitätselemente können in eine Datenbank eingegeben oder automatisch übergeben und mit weiteren Daten verknüpft werden. Auch ist es möglich, weitere Informationen, sei es nach einer Verknüpfung mit Daten einer Datenbank oder auch unabhängig davon, zusätzlich zur Identitätsinformation in das Identitätselement einzulesen. Beispielsweise können Informationen über das abzurauchende Tabakprodukt, etwa Parameter hinsichtlich deren spezifischer Eigenschaften, wie beispielsweise physikalische Messgrößen, Bezeichnungen oder Abrauchparameter in das Identitätselement beispielsweise eines Filterhalters eingelesen werden, so dass in Abhängigkeit davon der Abrauchprozess gesteuert, überwacht oder angepasst werden kann.

Sehr vorteilhaft ist es, wenn das Identitätselement programmierbar, sei es vorprogrammiert vor Anbringen am Bauteil der Abrauchmaschine oder auch nachfolgend programmierbar ist. Besonders vorteilhaft ist es dabei, wenn das Identitätselement Teil eines RFID-Systems ist, wobei das Identitätselement entweder mit vorgegebenem Programm oder mit Programmiermöglichkeit versehen ist.

Besonders vorteilhaft ist es dabei, dass zusätzlich zu den Informationen in den jeweiligen Identitätselementen Messergebnisse von Laborgeräten, wie etwa einem Wiegeergebnis oder einer Feuchtigkeitsmessung einer Probe eingelesen werden, und diese Messergebnisse in dem jeweiligen Identitätselement verknüpft und ggf. sofort für die Steuerung, Anpassung, Dokumentation und Auswertung des Abrauchvorgangs genutzt werden können. Im Falle, dass im Zusammenhang mit der Abrauchmaschine ein Tabakprodukt- bzw. ZigarettenMagazin, das ggf. auswechselbar ist, verwendet wird, ist es vorteilhaft, auch das Tabakprodukt-Magazin mit einem Identitätselement zu versehen.

Ein großer Vorteil der vorliegenden Erfindung besteht insbesondere auch darin, dass die jeweiligen während des Abrauchvorgangs erhaltenen Informationen immer sicher und zuverlässig den Komponenten, den Abrauchprodukten und den Messergebnissen zugeordnet sind, ohne dass Verwechslungen oder Datenverluste auftreten können.

Die gestellte Aufgabe wird weiterhin mit einem Verfahren zum Abrauchen von Tabakprodukten gemäß Anspruch 8 gelöst. Den Bauteilen einer Abrauchmaschine, insbesondere denjenigen, die ablaufmäßig ausgewechselt werden, wie dem Tabakprodukt-Magazin, der Rauchfalle, dem Filterhalter und/oder dem Filterelement, sind jeweils Identitätselemente zugeordnet, in denen jeweils spezifische Information gespeichert wird, sei es durch vorgegebene Einspeicherung oder durch Einlesen spezifischer Information etwa aus einer Datenbank. Die spezifische Information der Identitätselemente der Abrauchmaschinen-Bauteile werden mit Mess- und/oder Analyseergebnisse von Laborgeräten, wie Waagen, Feuchtigkeits-Messgeräten, Extraktionsgeräten, Probenaufbereitungsgeräten Gaschromatographen und/oder auch mit Abrauchparametern verknüpft.

Von besonderem Vorteil ist eine Ausführungsform der Erfindung, bei der die verknüpften Informationen zur Steuerung und/oder Anpassung von Verfahrensschritten des Abrauchverfahrens verwendet werden. Dadurch ist es möglich, in Abhängigkeit von den verknüpften Informationen, in denen Mess- und Analyseergebnisse enthalten sind, bereits während des Abrauchvorgangs auf Abweichungen oder Besonderheiten im Prozessablauf sofort reagieren zu können.

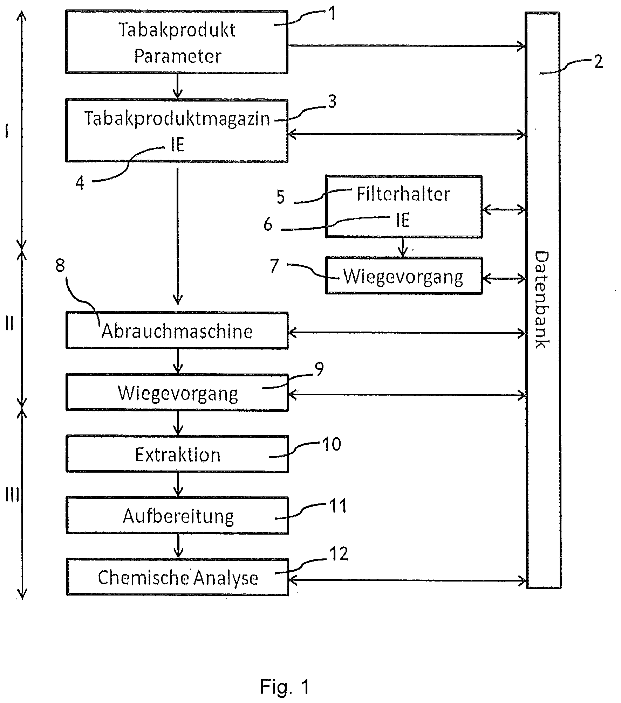

Die Erfindung wird nachfolgend anhand eines bevorzugten Ausführungsbeispiels unter Bezugnahme auf das Ablaufdiagramm gemäß der beigefügten Figur erläutert.

Vor dem eigentlichen Abrauchvorgang werden die dem Tabakprodukt spezifischen Parameterwerte, etwa Probengewicht, Probendimensionen, Feuchtegehalt, Abrauchparameter usw., in einem ersten Verfahrensschritt 1 ermittelt und in einer Datenbank 2 abgelegt.

Die abzurauchenden Tabakprodukte werden in ein Tabakprodukt-Magazin 3 angeordnet, welches mit einem Identitätselement 4, nachfolgend mit IE abgekürzt, versehen ist. Die dem Tabakprodukt-Magazin 3 spezifische Information, die im Zigarettenmagazin-IE 4 gespeichert ist, wird ebenfalls in der Datenbank 2 abgelegt und mit dem im ersten Verfahrensschritt ermittelten Parametersatz verknüpft. Alternativ ist es auch möglich, den im ersten Verfahrensschritt ermittelten Parametersatz der Tabakprodukte in das Tabakprodukt-Magazin-IE 4 einzulesen.

Ein Filterhalter 5 als Komponente der Rauchfalle, der ebenfalls mit einem Identitätselement, dem Filterhalter-IE 6 ausgestattet ist, wird in einem . Wiegevorgang 7 gewogen, und das Gewicht sowie gegebenenfalls weitere Filterhalterparameter der Datenbank 2 übertragen. Über die Datenbank 2 ist es auch möglich, das Wiegeergebnis in das Filterhalter-IE 6 und/oder das Tabakprodukt-Magazin-IE 4 und umgekehrt zu übertragen. Die Verknüpfung der mit Tabakprodukt-Magazin-IE 4 und Filterhalter-IE 6 verknüpften Informationen kann automatisiert durch eine Abrauchmaschine 8 erfolgen. Die Datenbank kann Bestandteil der Abrauchmaschine 8 oder separat aufgebaut und ggf. mit der Abrauchmaschine 8 verbunden sein.

Mit den zuvor genannten Abläufen ist die Vorbereitung I für das Abrauchen abgeschlossen, und der eigentliche Abrauchvorgang II beginnt.

In der Abrauchmaschine 8 werden die ihr vom Tabakprodukt-Magazin 3 zugeführten Tabakprodukte abgeraucht, wobei sich Abrauchprodukte im Filterhalter 5 und einem darin enthaltenen Filterelement ablagern. Die Parameter des Abrauchvorgangs, wie Zugzahl, Operator, Maschinen-Identifikations-Nummer, Tag, Uhrzeit, Umgebungsbedingungen usw., werden der Datenbank 2 zugeleitet und mit dem Parametersatz des Tabakprodukts, den Informationen des Tabakprodukt-Magazin-IE 4, des Filterhalter-IE 6 und/oder dem Ergebnis des Wiegevorgangs 7 verknüpft bzw. ihnen zugeordnet.

In einem weiteren Wiegevorgang 9 nach dem Abrauchvorgang wird das Gewicht des Filterhalters 5 und/oder des Filterelements gewogen und das Wiegeergebnis der Datenbank 2 zugeführt, in der eine Zuordnung zu den Informationen des Filterhalter-IEs 6 der Datenbank 2 erfolgt, um beispielsweise die Differenz zwischen den Wiegeergebnissen der Waage 7 und dem Wiegevorgang 9 zu ermitteln.

Mit dem Wiegen des Filterhalters 5 nach dem Abrauchvorgang ist das Abrauchen II beendet und die chemische Analyse III beginnt.

Der Filterhalter 5 mit dem Filterelement, oder auch nur das Filterelement und einem Auswasch- oder Auswischprodukt des Filterhalters 5, wird das Abrauchprodukt in einem Extraktionsschritt 10 extrahiert und einer Probenaufbereitung 11 zugeführt, um danach beispielsweise in einem Gaschromatographen-Analysenvorgang 12 chemisch analysiert zu werden.

Das Analyseergebnis wird ebenfalls der Datenbank 2 zugeführt und unter Anderem dem Filterhalter-IE 6, dem Tabakprodukt und den Parametern des Abrauchvorgangs zugeordnet.

Durch die Verwendung von Identitätselementen für die einzelnen Abrauchmaschienen-Bauteile und Abrauchvorgänge ist es möglich, sämtliche Informationen über diese Bauteile und bei den einzelnen Verfahrensvorgängen erhaltenen Daten in einer Datenbank abzulegen und zu verknüpfen, etwa um den Abrauchvorgang entsprechend dieser Informationen anzupassen und zu steuern. Besonders vorteilhaft ist es jedoch auch, die jeweils erhaltenen Ergebnisse der Verfahrensschritte in den einzelnen Identitätselementen der jeweiligen Bauteile zu speichern.

Die Erfindung wurde zuvor anhand eines bevorzugten Ausführungsbeispiels in Zusammenhang mit einem Probenverfolgungssystem beschrieben. Die Abrauchmaschine bzw. das Abrauchverfahren ist jedoch auch entsprechend den Gegebenheiten im Einzelfall abwandelbar, ohne dass dadurch der Erfindungsgedanke verlassen wird.

Beispielsweise kann die erfindungsgemäße Abrauchmaschine 8 auch eine solche ohne Filterhalter und/oder ohne Filterelement für die Rauchfalle 5 sein.

## Patentansprüche

1. Abrauchmaschine (8) mit einer Rauchfalle (5) **dadurch gekennzeichnet, dass** die Abrauchmaschine (8), die Rauchfalle (5) und/oder eine Komponente der Rauchfalle (5) wenigstens ein Identitätselement (4, 6) aufweist, das eine der Rauchfalle (5) und/oder der Rauchfallenkomponente spezifische Information enthält und aus dem Informationen auslesbar und/oder in es einlesbar sind, die Messergebnisse von Laborgeräten, wie Waagen, Feuchtigkeits-Messgeräten, Längen- und Durchmesser-Messgeräten, wie Barometern, Hygrometern, Extraktionsgeräten, Probenaufbereitungsgeräten, Gaschromatographen und/oder Abrauchparameter sind.

2. Abrauchmaschine (8) nach Anspruch 1, **dadurch gekennzeichnet, dass** die Information in eine Datenbank (2) einlesbar oder aus ihr auslesbar ist.

3. Abrauchmaschine (8) nach einem der vorhergehenden Ansprüche, **dadurch gekennzeichnet, dass** die Datenbank (2) Bestandteil der Rauchmaschine ist.

4. Abrauchmaschine (8) nach einem der vorhergehenden Ansprüche, **dadurch gekennzeichnet, dass** die Abrauchmaschine (8) mit einer externen Datenbank (2) verbunden ist und mit dieser kommuniziert.

5. Abrauchmaschine (8) nach einem der vorhergehenden Ansprüche, **dadurch gekennzeichnet, dass** das Identitätselement (4, 5) programmierbar ist.

6. Abrauchmaschine (8) nach einem der vorhergehenden Ansprüche, **dadurch gekennzeichnet, dass** das Identitätselement (4, 5) Teil eines RFID-Systems ist.

7. Abrauchmaschine (8) nach einem der vorhergehenden Ansprüche, **dadurch gekennzeichnet, dass** die Abrauchmaschine (8) ein Tabakprodukt-Magazin (3) aufweist, das mit einem Identitätselement (4) versehen ist.

8. Verfahren zum Abrauchen von Tabakprodukten in einer Abrauchmaschine (8), die eine Rauchfalle (5) aufweist, **dadurch gekennzeichnet, dass** der Rauchfalle, einer Komponenten der Rauchfalle und/oder einem Tabakprodukt-Magazin (3) jeweils ein Identitätselement (4, 6) zugeordnet wird, in dem jeweils spezifische Information gespeichert wird, und die jeweils spezifische Information der jeweiligen Identitätselemente mit Mess- und/oder Analyseergebnissen von Laborgeräten, wie Waagen, Feuchtigkeits-Messgeräten, Längen- und Durchmessermessgeräten, Barometern, Hygrometern, Extraktionsgeräten, Probenaufbereitungsgeräten und/oder Gaschromatographen und/oder Abrauchparametern verknüpft werden.

9. Verfahren zum Abrauchen von Tabakprodukten nach Anspruch 8, **dadurch gekennzeichnet, dass** die verknüpften Informationen zur Steuerung, Überwachung und/oder Anpassung von Verfahrensschritten des Abrauchverfahrens verwendet werden.

## Claims

1. A smoking machine (8) incorporating a smoke trap (5) **characterised in that** the smoking machine (8), the smoke trap (5) and/or a component of the smoke trap (5) comprises at least one identity element (4, 6) which contains information specific to the smoke trap (5) and/or the smoke trap component and from which or into which items of information are readable and/or are insertible which are the results of measurements from laboratory instruments such as balances, humidity measuring instruments, length and diameter measuring instruments, such as barometers, hygrometers, extraction devices, sample preparation devices, gas chromatographs and/or smoking parameters.

2. A smoking machine (8) in accordance with claim 1, **characterised in that** the information is insertible into a database (2) or is readable from it.

3. A smoking machine (8) in accordance with anyone of the preceding claims, **characterised in that** the database (2) is a constituent of the smoke machine.

4. A smoking machine (8) in accordance with anyone of the preceding claims, **characterised in that** the smoking machine (8) is connected to an external database (2) and communicates therewith.

5. A smoking machine (8) in accordance with anyone of the preceding claims, **characterised in that** the identity element (4, 5) is programmable.

6. A smoking machine (8) in accordance with anyone of the preceding claims, **characterised in that** the identity element (4, 5) is part of an RFID system.

7. A smoking machine (8) in accordance with anyone of the preceding claims, **characterised in that** the smoking machine (8) comprises a tobacco product magazine (3) which is provided with an identity element (4).

8. Method of smoking tobacco products in a smoking machine (8) which comprises a smoke trap (5) **characterised in that** a respective identity element (4, 6) is associated with the smoke trap, a component of the smoke trap and/or a tobacco product magazine (3) and specific information is stored in each identity element, and the specific information of the respective identity elements are linked with the results of measurements and/or analysis laboratory instruments, such as balances, humidity measuring instruments, length and diameter measuring instruments, barometers, hygrometers, extraction devices, sample preparation devices and/or gas chromatographs and/or smoking parameters.

9. A method of smoking tobacco products in accordance with claim 8, **characterised in that** the linked items of information are used for the control, monitoring and/or adjustment of process steps of the smoking process.

## Revendications

1. Machine de fumage (8) comportant un piège à fumée (5), **caractérisée en ce que** la machine de fumage (8), le piège à fumée (5) et/ou un composant du piège à fumée (5) comprend au moins un élément d'identité (4, 6) qui contient des informations spécifiques au piège à fumée (5) et/ou au composant du piège à fumée et duquel et/ou dans lequel des éléments d'information sont lisibles qui sont les résultats de mesures par des instruments de laboratoire tels que des balances, des instruments de mesure d'humidité, des instruments de mesure de longueur et de diamètre, tels que des baromètres, des hygromètres, des dispositifs d'extraction, des dispositifs de préparation d'échantillon, des chromatographes en phase gazeuse et/ou des paramètres de fumage.

2. Machine de fumage (8) selon la revendication 1, **caractérisée en ce que** les informations sont lisibles par une base de données (2) ou sont lisibles à partir de celle-ci.

3. Machine de fumage (8) selon l'une quelconque des revendications précédentes, **caractérisée en ce que** la base de données (2) est un constituant de la machine de fumage.

4. Machine de fumage (8) selon l'une quelconque des revendications précédentes, **caractérisée en ce que** la machine de fumage (8) est connectée à une base de donnée externe (2) et communique avec celle-ci.

5. Machine de fumage (8) selon l'une quelconque des revendications précédentes, **caractérisée en ce que** l'élément d'identité (4, 5) est programmable.

6. Machine de fumage (8) selon l'une quelconque des revendications précédentes, **caractérisée en ce que** l'élément d'identité (4, 5) fait partie d'un système RFID.

7. Machine de fumage (8) l'une quelconque des revendications précédentes, **caractérisée en ce que** la machine de fumage (8) comprend un magasin de produits du tabac (3) qui est muni d'un élément d'identité (4).

8. Procédé de fumage de produits du tabac dans une machine de fumage (8) qui comprend un piège à fumée (5), **caractérisé en ce qu'**un élément d'identité respectif (4, 6) est associé au piège à fumée, à un composant du piège à fumée et/ou àun magasin de produit de tabac (3) et des informations spécifiques sont stockées dans chaque élément d'identité, et les informations spécifiques des éléments d'identité respectifs sont liées aux résultats de d'instruments de laboratoire d'analyse et/ou de mesure, tels que des balances, des instruments de mesure d'humidité, des instruments de mesure de longueur et de diamètre, des baromètres, des hygromètres, des dispositifs d'extraction, des dispositifs de préparation d'échantillon, des chromatographes en phase gazeuse et/ou des paramètres de fumage.

9. Procédé de fumage de produits de tabac selon la revendication 8, **caractérisé en ce que** les éléments liés des informations sont utilisés pour la commande, la surveillance et/ou le réglage d'étapes de procédé du procédé de fumage.
